# EUROPEAN PATENT APPLICATION

(11) **EP 4 123 494 A1**
(43) Date of publication of application: **25.01.2023**
(21) Application number: 22183541.6
(22) Date of filing: 07.07.2022
(51) Int. Cl.: G06F 30/10, G06F 30/17, G06F 119/14, G06F 113/26

(54) **ASSEMBLY EVALUATION SYSTEM, ASSEMBLY EVALUATION METHOD, AND ASSEMBLY EVALUATION PROGRAM**

(30) Priority: 20.07.2021 JP 2021119569
(71) Applicant: Mitsubishi Heavy Industries, Ltd., Tokyo 100-8332 (JP)
(72) Inventor: TERASAKA, Akihiro, Chiyoda-ku, Tokyo, 100-8332 (JP); TSUBOI, Michihiro, Chiyoda-ku, Tokyo, 100-8332 (JP)
(74) Representative: Hoffmann Eitle

(57) **Abstract**

An object is to provide assembly evaluation system, method, and program that can reduce time and effort in assembly evaluation. A assembly evaluation system (10) for two components joined to each other includes: a simulation unit (23) configured to, in accordance with analysis models based on respective three-dimensional shapes of the components, estimate respective deformation shapes of the components resulted when the components are deformed from shapes in an unloaded state and joined to each other; a deformation evaluation unit (24) configured to, based on the estimated deformation shapes, evaluate at least any one of a stress and a distortion occurring in each of the components when joined; and a gap evaluation unit (26) configured to, based on the estimated deformation shapes, evaluate a gap between the components when joined.

## Description

### BACKGROUND

### Technical Field

The present disclosure relates to an assembly evaluation system, an assembly evaluation method, and an assembly evaluation program.

### DESCRIPTION OF RELATED ART

In assembly operations of aircraft structures, for example, components are joined to each other. Since deformation may occur in such components when joined, it is required to check a reduction in strength due to the joining between the components when joined. For example, a load measurement to apply a straightening load by using weights or the like to deform a component and measure the shape thereof or a GAP measurement (groove inspection) to temporarily assemble components with each other and measure the gap (clearance) between the components may be performed.

Japanese Patent No. 6655105 discloses that a gap estimation value is derived by an estimation model.

Japanese Patent No. 6655105 is an example of the related art.

### BRIEF SUMMARY

### TECHNICAL PROBLEM

When the load measurement is performed, an operation to install weights to a component is required for applying a straightening load, which takes time and effort. Since the position where the weight is placed depends on a worker, measurement results may vary. When the GAP measurement is performed, components are temporarily assembled, and in this state, the gap is measured. Thus, it takes time and effort in the measurement.

In Japanese Patent No. 6655105, although it is disclosed that gap estimation by using an estimation model is performed, the internal stress is suppressed by an interposed shim, and no stress estimation is performed.

The present disclosure has been made in view of such circumstances and intends to provide an assembly evaluation system, an assembly evaluation method, and an assembly evaluation program that can reduce time and effort in assembly evaluation.

### SOLUTION TO PROBLEM

The first aspect of the present disclosure is an assembly evaluation system for two components joined to each other, and the assembly evaluation system includes: a simulation unit configured to, in accordance with analysis models based on respective three-dimensional shapes of the components, estimate respective deformation shapes of the components resulted when the components are deformed from shapes in an unloaded state and joined to each other; a deformation evaluation unit configured to, based on the estimated deformation shapes, evaluate at least any one of a stress and a distortion occurring in each of the components when joined; and a gap evaluation unit configured to, based on the estimated deformation shapes, evaluate a gap between the components when joined.

The second aspect of the present disclosure is an assembly evaluation method for two components joined to each other, and the assembly evaluation method includes: in accordance with analysis models based on respective three-dimensional shapes of the components, estimating respective deformation shapes of the components resulted when the components are deformed from shapes in an unloaded state and joined to each other; based on the estimated deformation shapes, evaluating at least any one of a stress and a distortion occurring in each of the components when joined; and based on the estimated deformation shapes, evaluating a gap between the components when joined.

The third aspect of the present disclosure is an assembly evaluation program for two components joined to each other, and the assembly evaluation program causes a computer to perform processes of: in accordance with analysis models based on respective three-dimensional shapes of the components, estimating respective deformation shapes of the components resulted when the components are deformed from shapes in an unloaded state and joined to each other; based on the estimated deformation shapes, evaluating at least any one of a stress and a distortion occurring in each of the components when joined; and based on the estimated deformation shapes, evaluating a gap between the components when joined.

### ADVANTAGEOUS EFFECTS

The present disclosure achieves an advantageous effect that time and effort in assembly evaluation can be reduced.

### BRIEF DESCRIPTION OF THE SEVERAL VIEWS OF THE DRAWINGS

Fig. 1 is a schematic configuration diagram illustrating an example of a hardware configuration of an assembly evaluation system according to one embodiment of the present disclosure.
Fig. 2 is a function block diagram illustrating functions of the assembly evaluation system according to one embodiment of the present disclosure.
Fig. 3 is a diagram illustrating an example of acquisition of shape data according to one embodiment of the present disclosure.
Fig. 4 illustrates an example of three-dimensional shape data according to one embodiment of the present disclosure.
Fig. 5 is a diagram illustrating an example of respective analysis models of components according to one embodiment of the present disclosure.
Fig. 6 is a diagram illustrating an example in which the analysis models are deformed according to one embodiment of the present disclosure.
Fig. 7 is a diagram illustrating an example of the analysis models are combined according to one embodiment of the present disclosure.
Fig. 8 is a diagram illustrating gaps according to one embodiment of the present disclosure.
Fig. 9 is a diagram when the components are joined to each other according to one embodiment of the present disclosure.
Fig. 10 is a flowchart illustrating an example of a procedure of an assembly evaluation process according to one embodiment of the present disclosure.
Fig. 11 is a diagram illustrating load measurement.
Fig. 12 is a diagram illustrating GAP measurement.

### DETAILED DESCRIPTION

One embodiment of an assembly evaluation system, an assembly evaluation method, and an assembly evaluation program according to the present disclosure will be described below with reference to the drawings.

An assembly evaluation system 10 evaluates a stress or the like for assembly of two components joined to each other. Joining means integrally forming components which have been separately molded. Specifically, joining may be assembling, fusion, adhesion, co-bonding, fastening (for example, fastening by a fastener), or the like. A method for joining components is not limited.

Although each component is molded based on a desired shape required by design (hereafter, referred to as "design shape"), a finished component may have a slight difference from the design shape. In such a case, to join the components to each other, it may be required to slightly deform each component from the shape in a finished state (unloaded state). If a stress or a distortion occurs in a component due to such deformation, this may lead to a reduction in the strength of the component. Thus, the stress or the like are evaluated in the assembly evaluation system 10.

In the present embodiment, each component is formed of metal. Each component may be formed of a composite material. In the present embodiment, a case where the components are an outside panel and a joining member in an aircraft structure, respectively, will be described as an example.

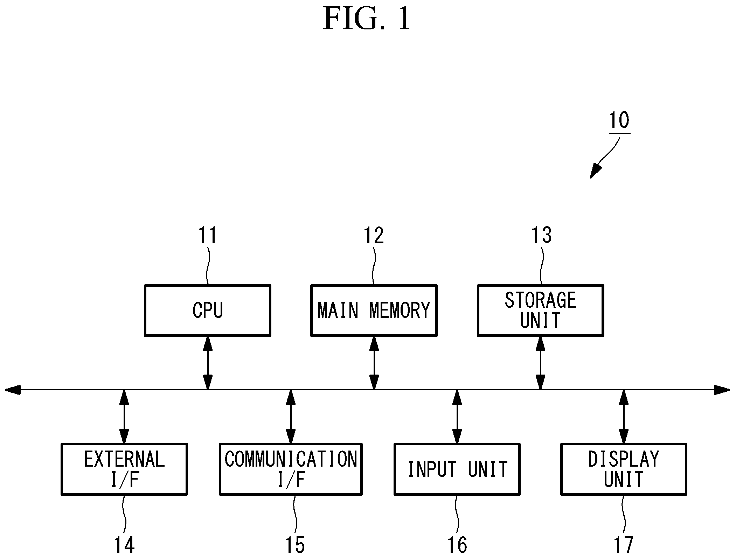

Fig. 1 is a schematic configuration diagram illustrating an example of a hardware configuration of the assembly evaluation system 10 according to one embodiment of the present disclosure. As illustrated in Fig. 1, the assembly evaluation system 10 is a so-called computer and includes a central processing unit (CPU) 11, a main memory 12, a storage unit 13, an external interface 14, a communication interface 15, an input unit 16, a display unit 17, and the like, for example. These units are connected to each other directly or indirectly via buses and perform various processes in cooperation with each other.

The CPU 11 performs overall control of the assembly evaluation system 10 by operating system (OS) stored in the storage unit 13 connected via a bus, for example, and performs various processes by executing various programs stored in the storage unit 13.

The main memory 12 is formed of a writable memory such as a cash memory, a random access memory (RAM), or the like, for example, and utilized as a working area where an execution program of the CPU 11 is read, data processed by the execution program is written, or the like.

The storage unit 13 is a non-transitory computer readable storage medium and may be, for example, a read only memory (ROM), a hard disk drive (HDD), a flash memory, or the like. The storage unit 13 stores OS such as Windows (registered trademark), iOS (registered trademark), Android (registered trademark), or the like, for example, used for performing overall control of the device, a basic input/output system (BIOS), various device drivers used for operating peripherals as hardware, various application software, various data or files, and the like. Further, the storage unit 13 stores a program used for implementing various processes or various data required for implementing various processes.

The external interface 14 is an interface to be connected to an external device. An example of the external device may be an external monitor, a USB memory, an external HDD, or the like. Note that, although only a single external interface is depicted in the example illustrated in Fig. 1, a plurality of external interfaces may be provided.

The communication interface 15 functions as an interface to be connected to a network to communicate with another device and transmit and receive information.

For example, the communication interface 15 communicates with another device via a wired or wireless connection, for example. The wireless communication may be communication using Bluetooth (registered trademark), Wi-Fi, a dedicated communication protocol, or the like. An example of the wired communication may be a wired local area network (LAN) or the like.

The input unit 16 is a user interface such as a keyboard, a mouse, a touch pat, or the like for the user to provide an instruction, for example.

The display unit 17 is a liquid crystal display, an organic electroluminescence (EL) display, or the like, for example. Further, the display unit 17 may be a touch panel display with an overlapped touch panel.

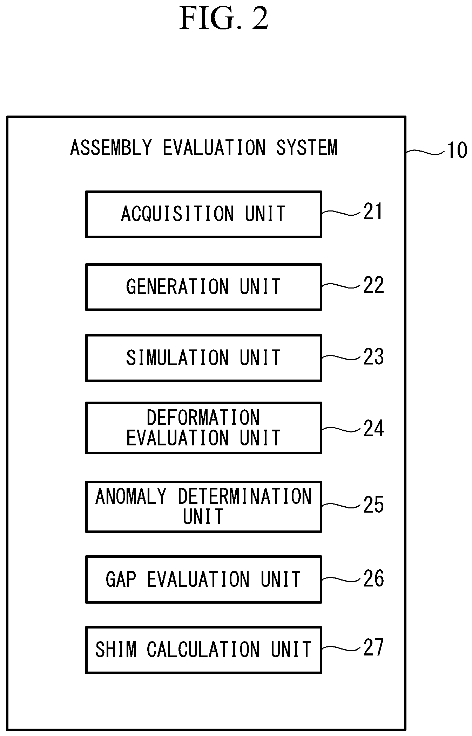

Fig. 2 is a function block diagram illustrating functions of the assembly evaluation system 10. As illustrated in Fig. 2, the assembly evaluation system 10 according to the present embodiment includes an acquisition unit 21, a generation unit 22, a simulation unit 23, a deformation evaluation unit 24, an anomaly determination unit 25, a gap evaluation unit 26, and a shim calculation unit 27 as main configurations.

Functions implemented by these units are implemented by processing circuitry, for example. For example, a series of processes for implementing the function illustrated below are stored in advance in the storage unit 13 in a form of a program as an example, and various functions are implemented when the CPU 11 loads the program into the main memory 12 and performs modification and operational processing on information.

Note that an applied program form may be a form in which a program is installed in advance in the storage unit 13, a form in which a program is provided in a state of being stored in another computer readable storage medium, a form in which a program is delivered via a wired or wireless communication scheme, or the like. The computer readable storage medium may be a magnetic disk, a magneto-optical disk, a CD-ROM, a DVD-ROM, a semiconductor memory, or the like.

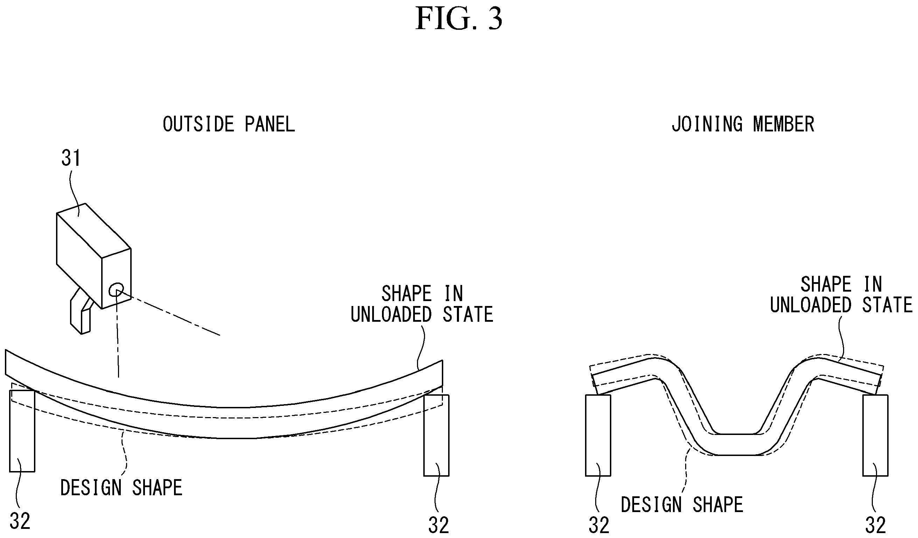

The acquisition unit 21 acquires three-dimensional shape data of each component in an unloaded state. The unloaded state refers to a state where no load (loading) is applied to a component (with no weight, no measurement tool, or the like). Fig. 3 is a diagram illustrating an example of acquisition of shape data. To form an unloaded state, each component is placed on a table 32. Fig. 3 illustrates an outside panel and a joining member, respectively. In Fig. 3, the actual shape (the shape in an unloaded state) of each component is illustrated by a solid line, and the design shape (the nominal shape) thereof is illustrated by a dotted line. The actual shape includes warping or the like occurring in a molding phase with respect to the design shape, and there is a slight difference in the actual shape.

Each component is placed on the table 32, and in this state, the three-dimensional shape is measured by a measuring instrument 31 such as a camera. The acquisition unit 21 then acquires three-dimensional shape data measured by the measuring instrument 31. Although a method using a camera is illustrated in the above example, the method of acquiring three-dimensional shape data is not limited.

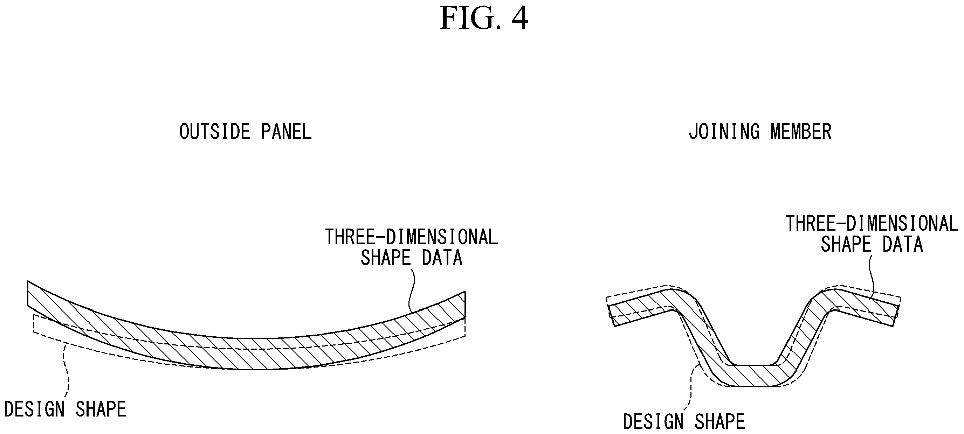

Fig. 4 is an example of three-dimensional shape data. As illustrated in Fig. 4, the shapes in the unloaded state of respective components (the outside panel and the joining member) after molded are acquired. For example, the three-dimensional shape data is point cloud coordinate information data.

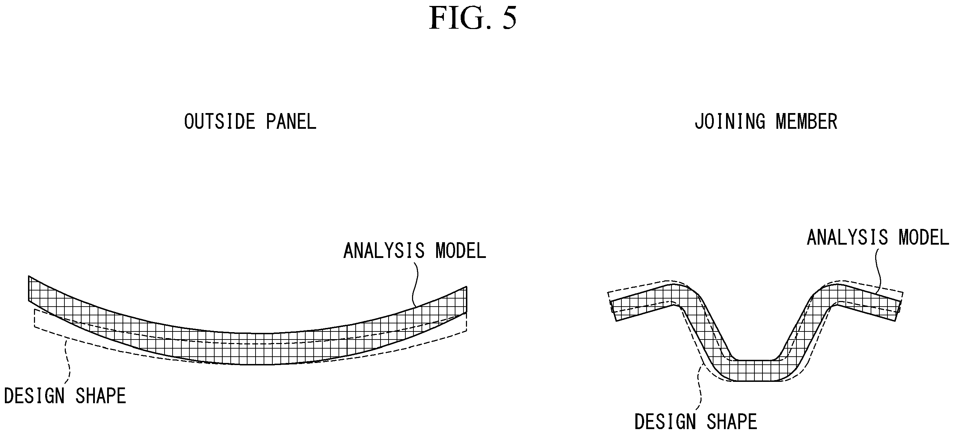

The generation unit 22 generates an analysis model associated with each component based on the three-dimensional shape data. Specifically, the generation unit 22 converts measured and acquired three-dimensional shape data into an analysis model so that an analysis simulation can be performed. Fig. 5 is a diagram illustrating an example of respective analysis models of the components. For example, each analysis model is represented as mesh data so that analysis can be performed with a finite element method.

In accordance with analysis models based on the three-dimensional shapes of these components, the simulation unit 23 estimates respective deformation shapes of the components for a case where these components are deformed from the shapes of the unloaded state and joined to each other. That is, the simulation unit 23 assumes a case where the components are joined to each other on a simulation and, in accordance with an analysis model, estimates how these components are deformed due to the joining.

The components have been designed so as to be joined in their design shapes, respectively. That is, when the components are joined to each other, respective shapes of these components will be closer to their design shapes. Thus, the simulation unit 23 deforms respective analysis models of the components to be closer to the design shapes and estimates the deformation shape of these components.

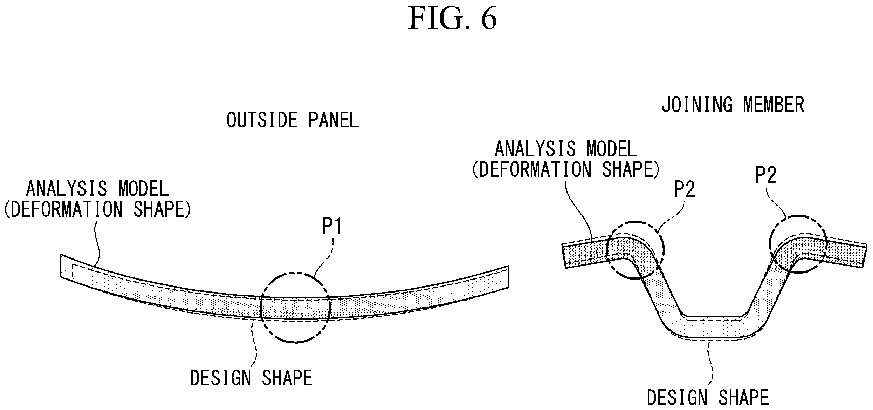

Specifically, the simulation unit 23 deforms an analysis model representing the three-dimensional shape of a component to be closer to the design shape, as illustrated in Fig. 6. Fig. 6 illustrates respective deformation shapes for the analysis models of the outside panel and the joining member.

By simulating the deformation shape based on the design shape in the simulation unit 23 in such a way, it is possible to estimate respective deformation shapes of the components when joined to each other. Although the case where it is assumed that the components have been joined and respective deformation shapes of the components are then estimated so that the deformation shapes become closer to the design shapes has been illustrated in the above example, the method is not limited as long as it is possible to estimate respective deformation shapes of the components when joined to each other. For example, deformation shapes may be estimated after the components (that is, analysis models) are joined to each other on a simulation.

Based on estimated deformation shapes, the deformation evaluation unit 24 evaluates at least any one of the stress and distortion occurring in respective components when joined. Although a case where the stress is evaluated is described in the present embodiment, the distortion can also be calculated in the same manner.

Specifically, the deformation evaluation unit 24 estimates respective stresses (stress distributions) occurring inside components based on respective deformation shapes of the components estimated by the simulation unit 23 (deformation by forced displacement from an unloaded state to a state of being straightened to a predetermined position). For example, the stress (or distortion) is estimated based on a deformation shape and material property information on the component. Fig. 6 illustrates stress distributions in deformation shapes (the shading in Fig. 6). As illustrated in Fig. 6, it is evaluated that a high stress occurs at the position of P1 in the outside panel and at the position of P2 in the joining member.

The anomaly determination unit 25 determines that there is an anomaly if at least any one of the stress and distortion evaluated on each component is above a reference value. When a high stress (or distortion) occurs, the strength of the component may decrease. Thus, in a stress evaluation result of a component evaluated by the deformation evaluation unit 24, if it is estimated that a stress above a reference value set in advance is occurring, the anomaly determination unit 25 determines that there is an anomaly in the target component. A result of anomaly determination is notified to the user, for example. The reference value is set in advance for a component as a reference value for a tolerable stress or distortion. That is, if the stress is below the reference value, even when a component is deformed to have a deformation shape, this can be tolerated in terms of strength.

Based on an estimated deformation shape, the gap evaluation unit 26 evaluates the gap between the components when joined. Note that it is preferable that the gap evaluation by the gap evaluation unit 26 be performed when it is determined by the anomaly determination unit 25 that there is no anomaly in respective components. That is, gap evaluation is performed after it is confirmed that no abnormal stress occurs even when the component is deformed to have the deformation shape.

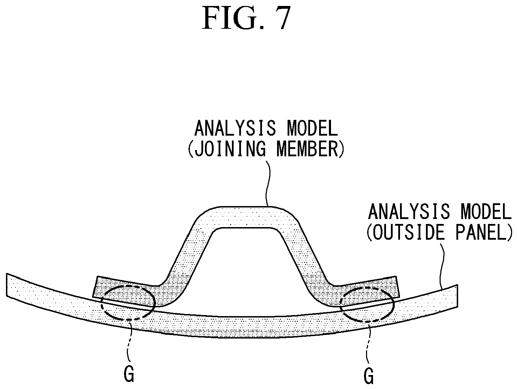

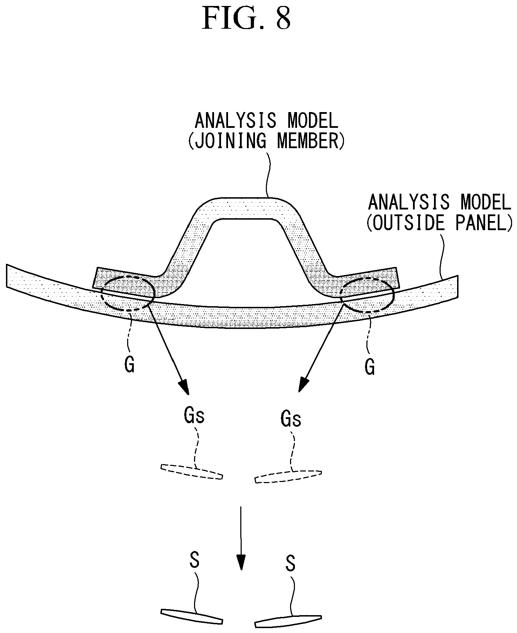

Specifically, the gap evaluation unit 26 combines respective analysis models of the components represented in the deformation shapes so as to have a desired joined state. Fig. 7 illustrates an example in which analysis models of deformation shapes of respective components of Fig. 6 are combined. The gap evaluation unit 26 virtually joins components (estimation models) to each other in deformation shapes on a simulation and evaluates an occurring gap (a portion represented as G in Fig. 8). For example, the gap is evaluated by a spacing (distance) of a clearance in a portion of the components that are assumed to come into contact with each other.

The shim calculation unit 27 calculates the shape of the shim S filled in a gap if the evaluated gap is not below the reference value. The reference value for a gap is set based on the upper limit of a gap that is filled by joining. Thus, the reference value depends on a joining method. If the gap is below the reference value, joining is possible even without a shim S (a member filled in the gap) described later inserted in the clearance. Thus, if the gap is below the reference value, the shape of the shim S is not calculated, and the actual outside panel and joining member are joined while being deformed. If the gap is not below the reference value, the shape of the shim S is calculated, and the clearance is eliminated by the shim S.

Specifically, the shim calculation unit 27 calculates a three-dimensional shape of a gap as illustrated in Fig. 8 (a portion represented as G in Fig. 8) to find a gap shape Gs based on a result of the assembly simulation of the analysis models of the deformation shapes as illustrated in Fig. 7. Based on the calculated gap shape Gs, the shape (the shape, the thickness, or the like) of the shim S is then calculated. For example, the gap shape Gs matches the shim shape. Once the shape of the shim S is calculated in such a way, the user actually designs the shim S based on this calculation result.

Note that, when the shim S is not automatically generated based on a gap evaluated by the gap evaluation unit 26, the shim calculation unit 27 may be omitted. Further, the anomaly determination unit 25 may compare a gap with the reference value and, if the evaluated gap is not below the reference value, determine that there is an anomaly.

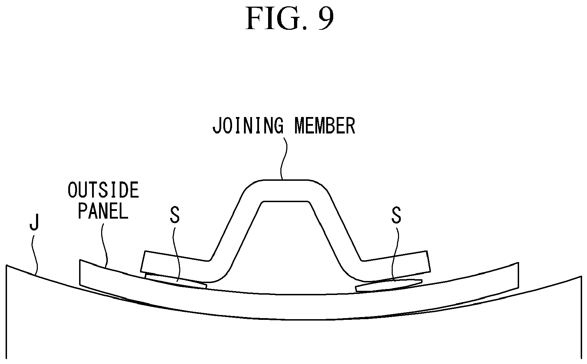

As discussed above, the assembly evaluation system 10 calculates respective deformation shapes of the components when joined that satisfy the requirement for the strength (stress or distortion) and, if necessary, a shim shape corresponding to an occurring gap. Based on these calculation results, while the actual outside panel and joining member are deformed as illustrated in Fig. 9, the shim S is inserted, and the actual outside panel and joining member are joined. As illustrated in Fig. 9, respective components are joined by using a joining tool J, for example.

Although each component is formed of metal in the above example, the component may be formed of a composite material. For a composite material, it is more difficult to predict deformation due to formation (finished shape) than in the case of a metal because of a difference in the thermal stress or the linear expansion coefficient in the laminating direction during the formation. Thus, by evaluating the stress, the distortion, or the like based on the formed shape in an unloaded state, it is possible to improve accuracy in evaluation even in a case of a composite material.

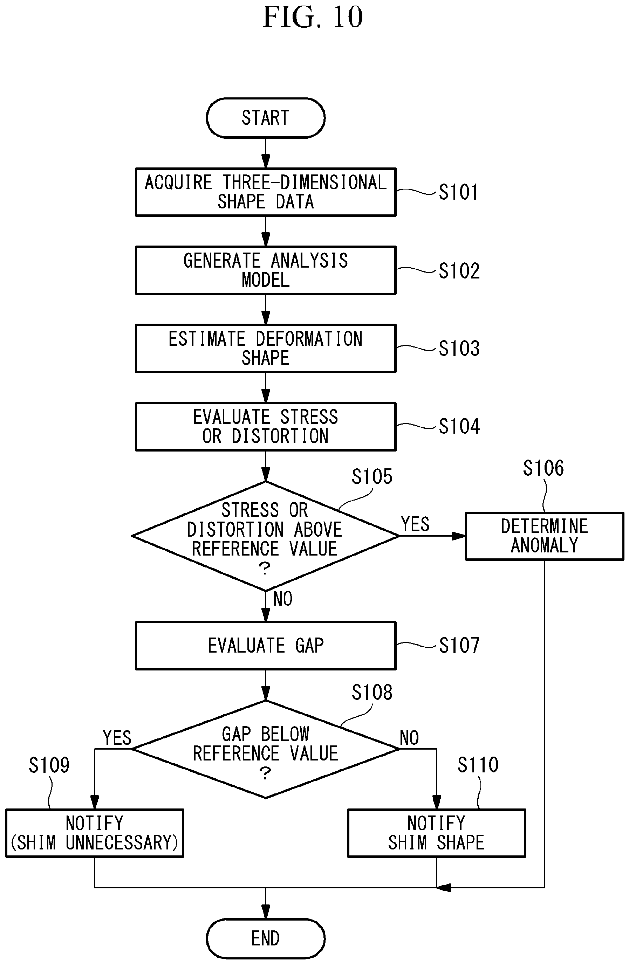

Next, an example of the process performed by the above assembly evaluation system 10 will be described with reference to Fig. 10. Fig. 10 is a flowchart illustrating an example of the procedure of the assembly evaluation process according to the present embodiment.

First, respective measurement results of three-dimensional shapes of the components in the unloaded state (three-dimensional shape data) are acquired (S101).

Next, based on the three-dimensional shape data, analysis models associated with respective components are generated (S102).

Next, based on the analysis models, respective deformation shapes of the components for a case where these components are deformed from the shapes of the unloaded state and joined to each other are estimated (S103).

Next, based on the estimated deformation shapes, respective stresses occurring in the components when joined are evaluated (S104). In addition to or instead of stresses, distortions may be evaluated.

Next, it is determined whether or not each evaluated stress is above a reference value (S105). If the evaluated stress is above the reference value (S105, YES), it is determined that there is an anomaly (S106), and the process ends. When it is determined that there is an anomaly, it is preferable to inform the user of the anomaly determination and information on the component. Further, if it is determined that there is an anomaly (S106), the process may return to S103 to reduce the amount of deformation and estimate the deformation shapes again.

If each evaluated stress is not above the reference value (S105, NO), the gap between the components when joined is evaluated based on the analysis models of the estimated deformation shapes (S107).

Next, it is determined whether or not the evaluated gap is below the reference value (S108). If the gap is below the reference value (S108, YES), it is notified that no gap occurs (S109) Based on this notification, the user recognizes that the components can be joined without the shim S.

If the gap is not below the reference value (S108, NO), the shape of the shim S to be filled in the gap is calculated, and the calculated shim shape is notified (S110). Based on this notification, the user recognizes the shim shape used for joining the components to each other and molds the shim S.

Once the calculation process is performed in such a way, the user performs joining of the actual components as illustrated in Fig. 9 based on the result of the calculation process.

Next, advantageous effects achieved by the assembly evaluation process described above will be described.

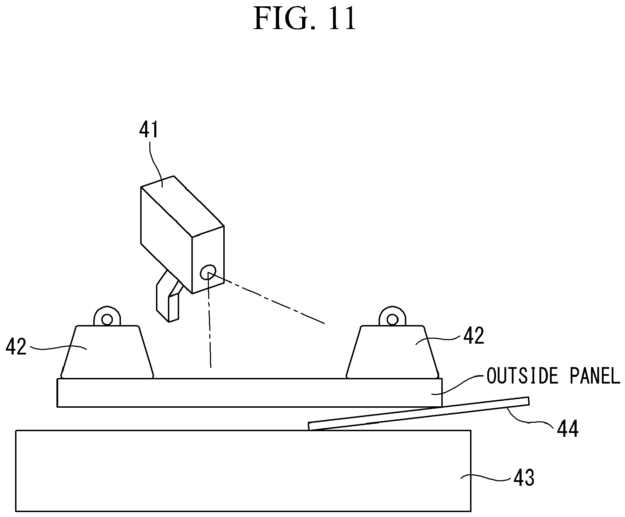

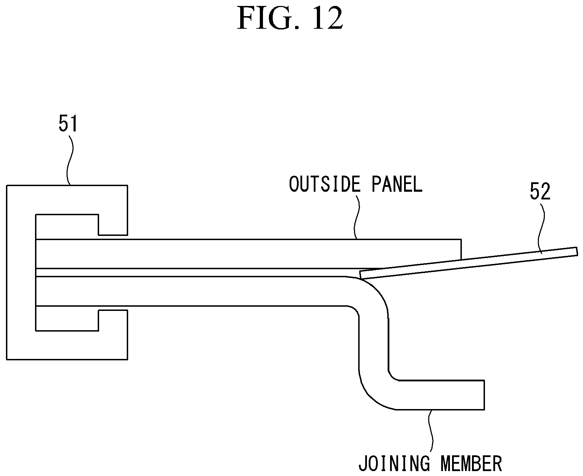

Fig. 11 illustrates an example when load measurement is performed on a molded outside panel as a reference example. Fig. 12 illustrates an example when GAP measurement is performed on a molded outside panel as a reference example.

As illustrated in Fig. 11, in the load measurement, a measurement tool 43 is used, and a plurality of weights 42 are placed on an outside panel so that the outside panel is shaped along the design shape. Measurement is then performed by a measuring instrument 41. The outside panel is deformed closer to the design shape due to the weights 42, and the stress or distortion occurring in the outside panel due to the deformation is estimated from the weights and the positions of the weights 42. Note that, in the load measurement, clearance gauge measurement to measure the clearance between the outside panel and the measurement tool 43 by using a clearance gauge 44 may be performed.

As illustrated in Fig. 12, in the GAP measurement, an outside panel and a joining member are actually temporarily assembled by using a tool 51 such as a vise, and a gap actually occurring in this state is evaluated by a clearance gauge 52.

In such a way, the load measurement of Fig. 11 and the GAP measurement in Fig. 12 require an operation of placing the weights 42 and time and effort for actually temporarily assembling the components by a vise or the like. In the assembly evaluation process in the present embodiment, however, evaluation is performed by analysis models, and this can eliminate the need for load measurement or GAP measurement.

As described above, according to the assembly evaluation system, the assembly evaluation method, and the assembly evaluation program of the present embodiment, deformation shapes are estimated by analysis models based on the three-dimensional shapes of components, respective stresses or distortions and the gap of the components when joined are evaluated, and it is therefore possible to eliminate the need for load measurement that actually applies a straightening load to deform components or GAP measurement that temporarily assembles components to measure a gap therebetween. It is thus possible to simplify the operation for assembly evaluation.

Since analysis models based on the three-dimensional shapes of components are used, the stresses or distortions and the gap can be evaluated taking the actual shapes of the components into consideration. In particular, when the components are composite materials, even though it is difficult to predict the actual shape (the shape after molded), it is also possible to apply the present embodiment to a case of composite materials by using analysis models based on the three-dimensional shapes (shape after molded) of the components.

When respective components are designed to be joined to each other in desired shapes required by the design, by deforming the analysis models to be closer to the desired shapes, it is possible to estimate respective deformation shapes of these components when these components are joined to each other.

For a composite material, it is more difficult to predict deformation occurring after molding of the composite material than in the case of metal, for example, because of a difference in the thermal stress or the linear expansion coefficient in the laminating direction during the molding. However, since the molded shape in an unloaded state is acquired, the difficulty in prediction of deformation due to the thermal stress or the like during molding can be reduced.

The present disclosure is not limited to only the embodiment described above, and various modified embodiments are possible within the scope not departing from the spirit of the present invention.

The assembly evaluation system, the assembly evaluation method, and the assembly evaluation program according to each embodiment described above are understood as follows, for example.

The assembly evaluation system (10) according to the present disclosure is an assembly evaluation system for two components joined to each other, and the assembly evaluation system includes: a simulation unit (23) configured to, in accordance with analysis models based on respective three-dimensional shapes of the components, estimate respective deformation shapes of the components resulted when the components are deformed from shapes in an unloaded state and joined to each other; a deformation evaluation unit (24) configured to, based on the estimated deformation shapes, evaluate at least any one of a stress and a distortion occurring in each of the components when joined; and a gap evaluation unit (26) configured to, based on the estimated deformation shapes, evaluate a gap between the components when joined.

According to the assembly evaluation system of the present disclosure, since the deformation shapes are estimated in accordance with the analysis models based on the three-dimensional shapes of the components and the stresses or distortions and the gap of the components when joined are evaluated, this can eliminate the need for load measurement that actually applies a straightening load to deform components or GAP measurement that temporarily assembles components to measure a gap. It is therefore possible to simplify the operation for assembly evaluation. Since analysis models based on the three-dimensional shapes of the components are used, the stresses or distortions and the gap can be evaluated taking the actual shapes of the components into consideration. In particular, when the components are composite materials, even though it is difficult to predict the actual shape (the shape after molded), it is also possible to apply the assembly evaluation system to a case of composite materials by using analysis models based on the three-dimensional shapes (the shape after molded) of the components.

The assembly evaluation system according to the present disclosure may include an acquisition unit (21) configured to acquire respective three-dimensional shape data of the components in an unloaded state and a generation unit (22) configured to generate the analysis models associated with the components based on the three-dimensional shape data.

According to the assembly evaluation system of the present disclosure, by generating analysis models associated with respective components based on the acquired three-dimensional shape data, it is possible to obtain analysis models required for estimation of the deformation shapes.

In the assembly evaluation system according to the present disclosure, the components may be designed to be joined in desired shapes required by design, respectively, and the simulation unit may deform the analysis models to be closer to the desired shapes and estimate the deformation shapes of the components.

According to the assembly evaluation system of the present disclosure, when the components are joined to each other in desired shapes required by design, by deforming the analysis models to be closer to the desired shapes, it is possible to estimate respective deformation shapes of the components when these components are joined to each other.

The assembly evaluation system according to the present disclosure may include a shim calculation unit (27) configured to calculate a shape of a shim (S) to be filled in the gap when the gap is not below a reference value.

According to the assembly evaluation system of the present disclosure, when the gap is not below the reference value, the shape of the shim to be filled in the gap is calculated, and thereby time and effort for designing a shim can be reduced.

In the assembly evaluation system according to the present disclosure, the components may be composite materials.

According to the assembly evaluation system of the present disclosure, for a composite material, it is more difficult to predict deformation occurring after molding of the composite material than in the case of metal, for example, because of a difference in the thermal stress or the linear expansion coefficient in the laminating direction during the molding. However, since the molded shape in an unloaded state is acquired, the difficulty in prediction of deformation due to the thermal stress or the like during molding can be reduced.

The assembly evaluation system according to the present disclosure may include an anomaly determination unit (25) configured to determine that there is an anomaly when at least any one of the stress and the distortion evaluated for each of the components is above a reference value.

According to the assembly evaluation system of the present disclosure, since it is determined that there is an anomaly when the deformation causes a stress or a distortion above the reference value to occur, it is possible to prevent abnormal joining.

The assembly evaluation method according to the present disclosure is an assembly evaluation method for two components joined to each other, and the assembly evaluation method includes steps of: in accordance with analysis models based on respective three-dimensional shapes of the components, estimating respective deformation shapes of the components resulted when the components are deformed from shapes in an unloaded state and joined to each other; based on the estimated deformation shapes, evaluating at least any one of a stress and a distortion occurring in each of the components when joined; and based on the estimated deformation shapes, evaluating a gap between the components when joined.

The assembly evaluation program according to the present disclosure is an assembly evaluation program for two components joined to each other, and the assembly evaluation program causes a computer to perform processes of: in accordance with analysis models based on respective three-dimensional shapes of the components, estimating respective deformation shapes of the components resulted when the components are deformed from shapes in an unloaded state and joined to each other; based on the estimated deformation shapes, evaluating at least any one of a stress and a distortion occurring in each of the components when joined; and based on the estimated deformation shapes, evaluating a gap between the components when joined.

### REFERENCE SIGNS LIST

- 10:: assembly evaluation system
- 11:: CPU
- 12:: main memory
- 13:: storage unit
- 14:: external interface
- 15:: communication interface
- 16:: input unit
- 17:: display unit
- 21:: acquisition unit
- 22:: generation unit
- 23:: simulation unit
- 24:: deformation evaluation unit
- 25:: anomaly determination unit
- 26:: gap evaluation unit
- 27:: shim calculation unit
- 31:: measuring instrument
- 32:: table
- S:: shim

## Claims

1. An assembly evaluation system for two components joined to each other, the assembly evaluation system comprising:
a simulation unit configured to, in accordance with analysis models based on respective three-dimensional shapes of the components, estimate respective deformation shapes of the components resulted when the components are deformed from shapes in an unloaded state and joined to each other;
a deformation evaluation unit configured to, based on the estimated deformation shapes, evaluate at least any one of a stress and a distortion occurring in each of the components when joined; and
a gap evaluation unit configured to, based on the estimated deformation shapes, evaluate a gap between the components when joined.

2. The assembly evaluation system according to claim 1 further comprising:
an acquisition unit configured to acquire respective three-dimensional shape data of the components in an unloaded state; and
a generation unit configured to generate the analysis models associated with the components based on the three-dimensional shape data.

3. The assembly evaluation system according to claim 1 or 2,
wherein the components are designed to be joined in desired shapes required by design, respectively, and
wherein the simulation unit deforms the analysis models to be closer to the desired shapes and estimates the deformation shapes of the components.

4. The assembly evaluation system according to any one of claims 1 to 3 further comprising a shim calculation unit configured to calculate a shape of a shim to be filled in the gap when the gap is not below a reference value.

5. The assembly evaluation system according to any one of claims 1 to 4, wherein the components are composite materials.

6. The assembly evaluation system according to any one of claims 1 to 5 further comprising an anomaly determination unit configured to determine that there is an anomaly when at least any one of the stress and the distortion evaluated for each of the components is above a reference value.

7. An assembly evaluation method for two components joined to each other, the assembly evaluation method comprising:
in accordance with analysis models based on respective three-dimensional shapes of the components, estimating respective deformation shapes of the components resulted when the components are deformed from shapes in an unloaded state and joined to each other;
based on the estimated deformation shapes, evaluating at least any one of a stress and a distortion occurring in each of the components when joined; and
based on the estimated deformation shapes, evaluating a gap between the components when joined.

8. An assembly evaluation program for two components joined to each other, the assembly evaluation program configured to cause a computer to perform processes of:
in accordance with analysis models based on respective three-dimensional shapes of the components, estimating respective deformation shapes of the components resulted when the components are deformed from shapes in an unloaded state and joined to each other;
based on the estimated deformation shapes, evaluating at least any one of a stress and a distortion occurring in each of the components when joined; and
based on the estimated deformation shapes, evaluating a gap between the components when joined.
